# EUROPÄISCHE PATENTSCHRIFT

(11) **EP 3 904 054 B1**
(45) Veröffentlichungstag und Bekanntmachung des Hinweises auf die Patenterteilung: **07.06.2023**
(21) Anmeldenummer: 20171917.6
(22) Anmeldetag: 28.04.2020
(51) Int. Cl.: B29C 63/00, B29C 63/02, B32B 37/00, B32B 37/08, B65B 9/04, B29C 65/00, B29L 31/00

(54) **SIEGELGEGENLAGEANORDNUNG, SIEGELVORRICHTUNG MIT EINER SIEGELGEGENLAGEANORDNUNG UND VORRICHTUNG ZUR HERSTELLUNG VON BLISTERVERPACKUNGEN MIT EINER SIEGELVORRICHTUNG**
SEAL COUNTER MEMBER ASSEMBLY, SEALING DEVICE WITH A SEAL COUNTER MEMBER ASSEMBLY AND DEVICE FOR MANUFACTURING BLISTER PACKS WITH A SEALING DEVICE
AGENCEMENT DE BUTÉE DE SCELLAGE, DISPOSITIF DE SCELLAGE AVEC UN AGENCEMENT DE BUTÉE DE SCELLAGE ET DISPOSITIF POUR FABRIQUER DES EMBALLAGES THERMOFORMÉS AVEC UN DISPOSITIF DE SCELLAGE

(43) Veröffentlichungstag der Anmeldung: 03.11.2021
(73) Patentinhaber: Körber Pharma Packaging GmbH, 33758 Schloß Holte-Stuckenbrock (DE)
(72) Erfinder: Sorge, Paul, 33659 Bielefeld (DE); Kohlhagen, Axel, 32758 Detmold (DE)
(74) Vertreter: Stork Bamberger Patentanwälte PartmbB

(56) Entgegenhaltungen:
- DE-A1-102004 012 449
- DE-B3- 10 347 777
- US-A- 3 759 011

## Beschreibung

Die Erfindung betrifft eine Siegelgegenlageanordnung, die zum Herstellen einer Siegelverbindung zwischen einer napfförmige Blisterhöfe aufweisenden Bodenfolie und einer Deckfolie in Wirkverbindung mit einer Siegelwalze bringbar ist, gekennzeichnet durch eine Aufnahmevorrichtung mit einer rotierend antreibbaren, einen Strömungskanal aufweisenden Hohlwelle, eine Antriebseinheit zum Antreiben der Hohlwelle, ein Formatteil, das mindestens abschnittsweise hohlzylindrisch ausgebildet ist, derart, dass es auf ein freies Ende der Hohlwelle aufgesetzt ist, wobei das Formatteil gegenüber der Hohlwelle drehfest und lösbar mit dieser verbunden ist und außenseitig auf der Mantelfläche Vertiefungen aufweist, die zur Aufnahme der Blisterhöfe der Bodenfolie ausgebildet und eingerichtet sind, und wobei der Aufnahmevorrichtung eine Einrichtung zum Zirkulieren eines Kühlmediums in dem Strömungskanal zum Kühlen mindestens von Teilen des Formatteils zugeordnet ist, wobei die Einrichtung zum Zirkulieren des Kühlmediums, bevorzugt über eine Drehdurchführung an einem dem Formatteil entgegengesetzten, anderen freien Ende der Hohlwelle, an den Strömungskanal angeschlossen ist, wobei das Formatteil eine hohlzylindrische Hülsenform aufweist, derart, dass die radiale Innenfläche des Formatteils durchgängig zylindrisch ausgebildet ist, und dass zwischen der äußeren Mantelfläche der Hohlwelle und der zylindrischen Innenfläche des Formatteils ein radialer Spalt ausgebildet ist, in dem ein im Wesentlichen radial wirkendes Verbindungsmittel angeordnet ist.

Die Erfindung betrifft weiterhin eine Siegelvorrichtung, ausgebildet und eingerichtet zum Siegeln einer Deckfolie auf eine mit napfförmigen Blisterhöfen versehene Bodenfolie zur Aufnahme von Produkten, umfassend ein Rahmengestell, mindestens eine am Rahmengestell gelagerte und beheizbare Siegelwalze sowie für jede Siegelwalze eine am Rahmengestell gelagerte Siegelgegenlageanordnung mit einer mindestens eine Hohlwelle und ein Formatteil umfassenden Gegenwalze, wobei die Siegelwalze zur Erzeugung einer Siegelkraft relativ zur Gegenwalze aus einer Warteposition in eine Arbeitsposition auf diese zu und zurück bewegbar ausgebildet und eingerichtet ist.

Die Erfindung ist des Weiteren auf eine Vorrichtung gerichtet, die zur Herstellung von Blisterverpackungen ausgebildet und eingerichtet, umfassend eine Transportvorrichtung zum Fördern einer Bodenfolie in Transportrichtung T, eine Vorwärmstation zum Erwärmen der Bodenfolie, eine Tiefziehstation zum Ausbilden napfförmiger Blisterhöfe in der Bodenfolie, eine Vorrichtung zum Dosieren von Produkten in den Blisterhöfen, eine Vorrichtung zum Zuführen einer Deckfolie, eine Siegelvorrichtung zum Herstellen eines Siegelverbundes zwischen der mit Produkten bestückten Bodenfolie und der Deckfolie, und eine Vorrichtung zum Vereinzeln einzelner Blisterverpackungen vom Siegelverbund.

Bei der Herstellung von Blisterverpackungen werden Bodenfolien, die auch als Formfolien bezeichnet werden und z.B. aus Polyvinylchlorid (kurz PVC) bestehen, mit Produkten gefüllt bzw. dosiert und anschließend wird die mit Produkten bestückte Bodenfolie mit einer Deckfolie stoffschlüssig verbunden, so dass die in Blisterhöfen, Nestern, Näpfen oder dergleichen der Bodenfolie liegenden Produkte hermetisch gegenüber der Umgebung verschlossen sind. Die Bodenfolie weist zur Aufnahme der Produkte napfförmige Blisterhöfe auf, die üblicherweise an die äußere Form der aufzunehmenden Produkte angepasst sind. Die Größe und/oder Anzahl der Blisterhöfe und/oder deren Anordnung/Zuordnung zueinander kann von Blisterverpackung zu Blisterverpackung variieren, ist entsprechend individuell und wird als Muster einer Blisterverpackung bezeichnet. Um ein solches Muster verarbeiten zu können, ist das korrespondierende/passende Formatteil einzusetzen. Das Formatteil bildet zusammen mit der Aufnahmevorrichtung eine Gegenwalze zur Siegelwalze. Die Siegelwalze und die Gegenwalze, die beim Siegelvorgang miteinander in Wirkverbindung stehen, bilden die Siegelvorrichtung.

Die Aufnahmevorrichtung der Siegelgegenlageanordnung kann die Hohlwelle umfassen, auf die das Formatteil aufgesteckt/aufgesetzt ist. Die Aufnahmevorrichtung kann aber auch eine Hohlwelle und weitere Komponenten umfassen, die zusammen mit dem Formatteil die Gegenwalze bilden. Die Hohlwelle kann einstückig oder mehrstückig ausgebildet sein. Insbesondere kann die Hohlwelle z.B. für den Fall, dass sie einstückig ausgebildet ist, eine gestufte Form aufweisen, derart, dass unterschiedliche Bereiche der Hohlwelle mit Durchmessern unterschiedlicher Größe ausgebildet sind.

Zum Verbinden der Bodenfolie mit der Deckfolie wird die Bodenfolie über und vorzugsweise mittels der Siegelgegenlageanordnung in Transportrichtung T transportiert. Dazu umfasst die Siegelgegenlageanordnung neben der Hohlwelle auch das Formatteil auf, das mit seiner Mantelfläche an das jeweils zu verarbeitende Muster der Blisterverpackung angepasst ist. Mit anderen Worten weist das Formatteil in seiner Mantelfläche Vertiefungen auf, die in der Größe, Form und Verteilung zueinander im Wesentlichen den Blisterhöfen der Bodenfolie entsprechen bzw. geringfügig größer sind, so dass die Blisterhöfe während des Siegelvorgangs in die Vertiefungen eintauchen können, wodurch die Siegelwalze beim Siegelvorgang keine (Siegel-)Kraft auf die Blisterhöfe ausüben kann. Durch den Formschluss zwischen den Blisterhöfen der Bodenfolie einerseits und den Vertiefungen der Mantelfläche des Formatteils andererseits kann die Gegenwalze zusätzlich zu einem separaten Antrieb für das Fördern der Bodenfolie eine Transportfunktion übernehmen. Die Siegelwalze selbst kann separat angetrieben sein oder rollt einfach auf der Gegenwalze ab.

In der Arbeitsposition der Siegelwalze der Siegelvorrichtung liegt die Siegelwalze - nur getrennt durch den aus Bodenfolien und Deckfolien gebildeten Folienverbund - an der Gegenwalze an und drückt mit einer Siegelkraft gegen die Gegenwalze auf den Folienverbund. Zum Verbinden der Bodenfolie mit der Deckfolie werden sowohl die Bodenfolie als auch die Deckfolie zwischen der Gegenwalze und der Siegelwalze hindurchgeführt, wodurch der versiegelte Folienverbund, der dann auch als Siegelverbund bezeichnet wird, unter Bildung einer endlosen Blisterverpackung entsteht. Für den Siegelvorgang wird die Siegelwalze erwärmt bzw. beheizt, wodurch Wärme nicht nur in den Folienverbund, sondern auch in die Gegenwalze eingeleitet wird. Das führt dazu, dass sich die Gegenwalze beim Siegelvorgang ebenfalls erwärmt, wodurch die mit den Vertiefungen versehene Bodenfolie beschädigt werden kann. Um eine unzulässige Produkterwärmung zu vermeiden, besteht die Möglichkeit der Kühlung mindestens von Teilen/Abschnitten des Formatteils, weshalb sich der Strömungskanal ausgehend von dem Anschluss der Einrichtung zum Zirkulieren des Kühlmediums durch die Hohlwelle bis in den Bereich des Formatteils bzw. Teilen davon erstreckt.

Der Siegelgegenlageanordnung kommt also eine zentrale Bedeutung beim Siegelvorgang zu, weshalb diese z.B. als Nachrüstsatz oder Austauschteil eine eigenständig zu betrachtende Komponente darstellt, die signifikanten Einfluss auf das Ergebnis der Blisterherstellung hat. Entsprechend ist die Wirkverbindung zur Siegelwalze für die Betrachtung der Siegelgegenlageanordnung alleine nur optional, solange die Siegelgegenlageanordnung ausgebildet und eingerichtet ist, mit einer Siegelwalze in Wirkverbindung bringbar zu sein. Wie erwähnt, bildet die Siegelgegenlageanordnung in Kombination mit der Siegelwalze die Siegelvorrichtung. Die Siegelwalze umfasst eine Hebelmechanik, mittels der die Siegelwalze für eine linienförmige Berührung auf die Gegenwalze zu und von dieser weg bewegbar ausgebildet ist. Dazu kann die Siegelwalze z.B. an entgegengesetzten Enden jeweils an einem Hebelarm gelagert sein, der mittels eines Pneumatikzylinders oder anderer Betätigungsmechanismen verstellbar ist. Die Siegelvorrichtung ihrerseits bildet eine eigenständige Bearbeitungsstation und ist bevorzugt jedoch Bestandteil einer Vorrichtung zum Herstellen von Blisterverpackungen.

Die Siegelgegenlageanordnung mit ihrem Formatteil dient innerhalb einer Siegelvorrichtung bzw. einer Vorrichtung zum Herstellen von Blisterverpackungen nicht nur als Gegenwalze für ein einziges Format, sondern für viele verschiedene Formate, so dass das Formatteil auf der Aufnahmevorrichtung einerseits zwar drehfest zu dieser angeordnet ist, andererseits aber auch lösbar befestigt ist, um das Formatteil eines ersten Formats gegen ein Formatteil mit einem anderen Format austauschen zu können. Dabei stehen drehfest und lösbar in keinem Widerspruch zueinander. Mit drehfest wird der Zustand beschrieben, dass das Formatteil relativ zur Hohlwelle nicht bewegbar ist, allerdings zusammen mit der Hohlwelle rotiert. Mit der lösbaren Befestigung wird beschrieben, dass das Formatteil nach dem Lösen der drehfesten Verbindung von der Hohlwelle abgenommen, ausgetauscht und wieder befestigt werden kann.

Im Stand der Technik umfasst die Aufnahmevorrichtung, auf die das Formatteil aufgesetzt ist, neben der Hohlwelle noch eine Kopfplatte. Bei den bekannten Siegelgegenlageanordnungen ist das Formatteil nur teilweise hohlzylindrisch ausgebildet. Eine Zwischenwand erstreckt sich radial über den gesamten Innendurchmesser. Das dadurch im Querschnitt H-förmige Formatteil ist auf die Hohlwelle und die Kopfplatte aufgesteckt, derart, dass die Kopfplatte sandwichartig zwischen der innenliegenden Zwischenwand des Formatteils und der Stirnseite der Hohlwelle liegt. Gegen diese Kopfplatte ist das Formatteil z.B. mit drei Schrauben oder von außen zentral zu bedienenden Spannbacken verschraubt bzw. verspannt. Der Strömungskanal erstreckt sich von der Kühleinrichtung durch die Hohlwelle bis in den Bereich der Kopfplatte. Ausgehend vom Strömungskanal innerhalb der Hohlwelle erstreckt sich der Strömungskanal innerhalb der Kopfplatte radial gerichtet in Richtung des Formatteils und bildet viele punktuelle Kontaktstellen mit unterschiedlich langen Wärmetransportwegen zwischen den einzelnen Vertiefungen des Formatteils und dem im Strömungskanal befindlichen Kühlmedium. Durch die H-förmige Querschnittsform kommt es zu einer ungleichmäßigen Temperaturverteilung auf der Mantelfläche des Formatteils. Diese wird noch dadurch weiter beeinträchtigt, nämlich noch ungleichmäßiger, dass in längsaxialer Erstreckung des Formatteils einzelne Abschnitte desselben über die Hohlwelle hinausragen, so dass das Formatteil in diesen Abschnitten innenseitig frei, also ohne jede Wärmeableitung, ist. Mit anderen Worten existieren für das Formatteil - bedingt durch die H-förmige Querschnittsform - Bereiche, in denen eine Wärmeableitung vorgesehen ist, und andere Bereiche, denen keine Wärmeableitung zugeordnet ist. Dadurch kann die Wärme von einigen Bereichen des Formatteils kontrolliert abgeleitet werden, von anderen Bereichen entsprechend nicht.

Es entsteht zwischen der Siegelwalze und der Gegenwalze über die Kontaktfläche eine uneinheitliche Temperaturverteilung, die auf den Siegelvorgang und insbesondere auch den Folienverbund und die darin angeordneten Produkte einen negativen und zum Teil nicht tolerierbaren Einfluss haben. Letztlich führen diese Temperaturschwankungen zu einer signifikanten und nicht tolerierbaren Temperaturdifferenz zwischen einem Stillstandmodus und einem Betriebsmodus. Um diese Temperaturschwankungen vor dem Betriebsbeginn auszugleichen, ist es im Stand der Technik notwendig, im Stillstandmodus mittels zusätzlicher Komponenten, z.B. einem Temperiergerät, die Gegenwalze bzw. zumindest das Formatteil vorzuheizen, wodurch sich eine erhöhte Wartezeit ergibt, bis sich eine solche Siegelgegenlageanordnung bzw. eine Siegelvorrichtung mit einer Siegelwalze und einer Siegelgegenlageanordnung in Betriebsbereitschaft befindet.

Ein weiterer Nachteil der bekannten Siegelgegenlageanordnungen besteht darin, dass die Handhabung der Siegelgegenlageanordnung und insbesondere des Formatteils bei einem Wechsel desselben für die Verarbeitung eines anderen Blistermusters umständlich und zeitintensiv ist. Wie erwähnt, besteht die Notwendigkeit darin, dass Siegelgegenlageanordnungen und Siegelvorrichtungen insbesondere in Blisterherstellungsmaschinen für unterschiedliche Formate eingesetzt werden. Das bedeutet, dass Blisterverpackungen mit voneinander abweichendem Muster hinsichtlich z.B. der Größe und/oder der Anzahl und/oder deren Verteilung verarbeitet werden. Das führt dazu, dass zumindest das Formatteil der Siegelgegenlageanordnung ausgetauscht werden muss, das drehfest aber lösbar an der Hohlwelle angeordnet ist. Dazu müssen Schrauben oder Klemmbacken von einer Bedienperson gelöst und wieder fixiert werden, was zeitlich und ergonomisch nachteilig ist.

Im Übrigen führt die bekannte Konstruktion der Siegelgegenlageanordnung mit Hohlwelle, Kopfplatte und Formatteil aufgrund der Teilevielzahl, deren Toleranzen und deren Konstruktion zu einer Beeinträchtigung der Konzentrizität, was zu Schwankungen bei der Siegelkraft führt, die wiederum unerwünschte und von den Kunden nicht akzeptierte Auswirkungen auf das äußere Erscheinungsbild der Blisterverpackungen haben. Ein weiterer Nachteil wird darin gesehen, dass mit der herkömmlichen Verbindung zwischen Formatteil und Hohlwelle Mikrobewegungen zwischen Hohlwelle und Formatteil zugelassen werden, die zu Verschleißerscheinungen führen. Weiterhin können temperatursensible Produkte mit solchen bekannten Konstruktionen nur unzureichend verarbeitet werden.

Bekannte Siegelgegenlageanordnungen und Siegelvorrichtungen mit den genannten Nachteilen sind weiterhin der US 3,759,011, der DE 103 47 777 B3 sowie der DE 10 2004 012 449 A1 zu entnehmen.

Der Erfindung liegt somit die Aufgabe zugrunde, eine konstruktiv einfache und individuell einsetzbare Siegelgegenlageanordnung zu schaffen, die eine hohe Prozessstabilität mit einer gleichmäßigen, konstanten und vorgebbaren Temperaturverteilung gewährleistet. Die Aufgabe besteht des Weiteren darin, eine entsprechende Siegelvorrichtung sowie eine Vorrichtung zum Herstellen von Blisterverpackungen vorzuschlagen.

Die erfindungsgemäße Siegelgegenlageanordnung hebt sich von den bekannten Lösungen dadurch ab, dass sie eine Aufnahmeeinrichtung mit einer rotierend antreibbaren, einen Strömungskanal aufweisenden Hohlwelle sowie eine Antriebseinheit zum Antreiben der Hohlwelle umfasst, wobei das Formatteil gegenüber der Hohlwelle drehfest und lösbar mit dieser verbunden ist, und zwischen der äußeren Mantelfläche der Hohlwelle und der zylindrischen Innenfläche des Formatteils ein radialer Spalt ausgebildet ist, in dem ein im Wesentlichen radial wirkendes Verbindungsmittel angeordnet ist. Mit anderen Worten ist das Formatteil - zumindest unterhalb der Vertiefungen der Mantelfläche - als ein auf der Innenseite glattes, durchgängiges Rohr ausgebildet. Durchgängig schließt explizit nicht aus, dass das Rohr außerhalb des Bereiches, in dem auf der außenseitigen Mantelfläche des Formatteils Vertiefungen ausgebildet sind, innenseitig Streben, Zwischenwände oder dergleichen vorgesehen sein können, sondern bezieht sich - im Sinne der Erfindung - über den gesamten Bereich, in dem sich Vertiefungen im Formatteil befinden. Anders ausgedrückt ist der Innendurchmesser des Formatteils in axialer Längserstreckung über die gesamte Länge mindestens des Bereiches, in dem sich auf der außenseitigen Mantelfläche Vertiefungen befinden, konstant, vorzugsweise jedoch über die gesamte Länge konstant. Das Formatteil ist vollständig auf das eine freie Ende der Aufnahmevorrichtung, also insbesondere das freie Ende der Hohlwelle aufgesetzt und umgibt die Hohlwelle gleichmäßig und über die gesamte Breite - die im Wesentlichen der Breite der zu erzeugenden Siegelnaht entspricht - des Formatteils in deren axialer Längserstreckung. In dem Spalt zwischen Hohlwelle und Formatteil ist das Verbindungsmittel angeordnet, das die Hohlwelle gegen das Formatteil in radialer Richtung verspannt. Das Formatteil ist damit zum einen kraftschlüssig sicher mit der Hohlwelle verbunden, um die Rotation der Hohlwelle präzise auf das Formatteil zu übertragen. Zum anderen ist ein gleichmäßige und im Wesentlichen ganzflächige thermische Kopplung zwischen dem Formatteil und der Aufnahmeeinrichtung, also insbesondere der Hohlwelle mit der daran angeschlossenen Einrichtung zum Zirkulieren des Kühlmediums sichergestellt. Mit dieser erfindungsgemäßen Ausbildung der Siegelgegenlageanordnung kann im Zusammenwirken mit der Siegelwalze ein optimierter Wärmetransport erreicht werden, wodurch sich eine konstante Temperatur über die Oberfläche der Gegenwalze und insbesondere des Formatteils ergibt. Dadurch fällt die Temperaturdifferenz zwischen Siegelwalze und Gegenwalze zwischen einem Stillstandmodus und einem Betriebsmodus nur sehr gering aus, so dass auf separate und zusätzliche Temperiergeräte verzichtet werden kann und die Betriebsbereitschaft unmittelbar herstellbar ist. Durch die geringe thermische Trägheit der Anordnung ist die Siegelgegenlageanordnung in einer Siegelvorrichtung schnell einsatzbereit. Dadurch, dass das Formatteil ein rohrförmiger Körper mit konstantem und durchgängigem Innendurchmesser ist, kann das Formatteil leicht und schnell für einen Formatwechsel ausgetauscht werden. Diese Ausbildung fördert auch die Rundlaufgenauigkeit der Gegenwalze. Im Ergebnis stellt die erfindungsgemäße Siegelgegenlageanordnung eine verbesserte Prozessstabilität sicher.

Vorteilhafterweise ist das Formatteil durchgängig hohlzylindrisch ausgebildet und in seiner axialen Erstreckung vollständig auf das freie Ende der Hohlwelle aufgesetzt, derart, dass das Formatteil mit seiner gesamten Innenfläche die Hohlwelle radial umgibt. Dazu weist die Hohlwelle an ihrem einen freien Ende einen Durchmesser auf, der geringfügig kleiner ist als der Innendurchmesser des Formatteils, so dass das Formatteil hülsenartig und überstandsfrei auf die Hohlwelle aufgesetzt ist.

Eine besonders bevorzugte Ausführungsform der erfindungsgemäßen Siegelgegenlageanordnung ist dadurch gekennzeichnet, dass das Verbindungsmittel eine vorzugsweise aus Metall gebildete Membran umfasst, die zwischen der äußeren Mantelfläche der Hohlwelle und der Innenfläche des Formatteils angeordnet ist, wobei zwischen der Innenfläche der Membran und der äußeren Mantelfläche der Hohlwelle ein umlaufender Ringspalt ausgebildet ist, der mit dem Strömungskanal der Hohlwelle in Strömungsverbindung steht. Als Ringspalt im Sinne der Erfindung ist alles zu verstehen, was in Strömungsverbindung mit dem Strömungskanal der Hohlwelle steht und zur Aufnahme des Kühlmediums geeignet ist, nämlich beispielsweise ein räumlicher Abstand zwischen der Innenfläche der Membran und der Mantelfläche der Hohlwelle oder eine spindelförmige oder gewindeartige Nut in der Mantelfläche der Hohlwelle. Die Membran als Verbindungsmittel ist entsprechend in dem Spalt zwischen der Hohlwelle und dem Formatteil angeordnet. Vorzugsweise sind Membran und Hohlwelle verschweißt, so dass eine kraftschlüssige und stoffschlüssige Verbindung hergestellt ist. Die flüssigkeits-/wasserdichte Befestigung der Membran auf der Hohlwelle kann auch anderweitig, z.B. durch Schrumpfprozesse oder dergleichen erfolgen. Der Ringspalt zwischen der Hohlwelle und der Membran, die vorzugsweise ebenfalls hülsenartig ausgebildet ist, ermöglicht das Durchströmen mit Kühlmedium, z.B. Kühlwasser oder anderen Flüssigkeiten und/oder Gasen. Durch die wasserdichte Fügung der Membran auf der Hohlwelle kann das Kühlmedium nicht entweichen. Wird das Kühlmedium, das aus dem Strömungskanal in den Ringspalt strömt, unter Druck gesetzt, führt dies zu einer Durchmesservergrößerung der Membran, die auf den elastischen Bereich begrenzt ist. Aufgrund der Durchmesservergrößerung der Membran spannt sich diese gegen das auf der Membran platzierte Formatteil, so dass das Formatteil drehfest aber auf einfache Art auch lösbar mit der Hohlwelle verbunden ist. Durch diese Art der Befestigung, also die hydraulische Aufweitung der Membran, durch die das Formatteil kraftschlüssig mit der Hohlwelle verbunden ist, wird die Bedienergonomie relevant verbessert. Alleine durch die Reduktion des Druckes löst sich das Formatteil von der Membran und damit von der Hohlwelle. Das Formatteil wird vor der Druckbeaufschlagung auf die auf der Hohlwelle befestigte Membran aufgesetzt. Vor der Druckbeaufschlagung ist der Außendurchmesser der Membran kleiner als der Innendurchmesser des Formatteils, so dass dieses leicht abziehbar und aufsteckbar ist. Nach der Druckbeaufschlagung der Membran ist der Innendurchmesser des Formatteils kleiner als der Außendurchmesser der druckbeaufschlagten Membran, so dass diese eng und großflächig an der Innenfläche des Formatteils anliegt.

Im Übrigen wird die Güte der Befestigung unabhängig von der Kraft und der Erfahrung der Bedienperson erreicht. Alleine durch Druckbeaufschlagung und Druckreduktion ist die Verbindung herstellbar bzw. lösbar. Durch die erfindungsgemäße Konstruktion fallen die Kontaktflächen zwischen Hohlwelle und Membran einerseits und Membran und Formatteil andererseits im Wesentlichen gleich aus. Das Kühlmedium, das gleichzeitig als Druckmedium fungiert, umströmt bzw. durchströmt die Gegenwalze über die gesamte Breite der herzustellenden Siegelnaht, die durch die Breite des Formatteils in axialer Längserstreckung definiert wird. Es entsteht über den Umfang der Hohlwelle und den Umfang der Membran eine umlaufende Kontaktfläche zur Innenfläche des Formatteils. Mit anderen Worten liegt die Innenfläche des Formatteils flächig und vollständig an der Membran an, die ihrerseits über den Ringspalt flächig und vollständig vom Kühlmedium umspült/unterspült wird. Damit ist ein optimaler Wärmetransport bzw. eine optimale Wärmeverteilung für eine hohe Prozessstabilität sichergestellt. Da sämtliche die Gegenwalze bildenden Komponenten, also die Hohlwelle, die Membran und das Formatteil, im Wesentlichen rotationssymmetrisch zur Drehachse der Hohlwelle ausgebildet sind, ergibt sich eine hohe Rundlaufgenauigkeit, die ihrerseits die Prozessstabilität weiter erhöht. Ein weiterer Vorteil besteht darin, dass die Gegenwalze aus wenigen Komponenten besteht, nämlich im Wesentlichen der Hohlwelle, der Membran und dem Formatteil, wodurch sich eine hohe Montagefreundlichkeit ergibt.

In einer bevorzugten Weiterbildung ist die Membran mindestens abschnittsweise als ein dünnwandiges Rohr ausgebildet, wobei das Material, aus dem die Membran hergestellt ist, vorzugsweise dem Material entspricht, aus dem die Hohlwelle mindestens im Bereich der Mantelfläche hergestellt ist. Sowohl die Hohlwelle als auch die Membran können aus Kunststoff hergestellt sein. Bevorzugt sind die Hohlwelle und die Membran aus einem Metall hergestellt. Auch Materialkombinationen und/oder Beschichtungen sind möglich. In jedem Fall ist der Werkstoff, aus dem die Membran hergestellt ist, mindestens begrenzt elastisch verformbar. Besonders vorteilhaft weisen die Materialien, aus denen die Hohlwelle und die Membran hergestellt sind, eine hohe Wärmeleitfähigkeit und ein geringes Elastizitätsmodul auf. Hohlwelle und Formatteil können auch aus unterschiedlichen Materialien bestehen. Durch den Einsatz einer dünnwandigen Membran ist der Weg/Abstand zwischen den Vertiefungen des Formatteils, und damit der in den Vertiefungen liegenden Bodenfolie, und dem Kühlmedium auf ein Minimum reduziert, so dass ein optimaler Wärmetransport sichergestellt ist. Durch die gleichmäßige und flächige Umschließung der Membran durch das Formatteil weist die Gegenwalze im Wesentlichen nur noch einen gemeinsamen Wärmeübergang auf, und zwar durchgängig mit im Wesentlichen gleichlangen Wärmetransportwegen.

In einer zweckmäßigen Weiterbildung sind der Strömungskanal und der Ringspalt über mindestens eine Bohrung, vorzugsweise über mehrere Bohrungen, miteinander verbunden. Ausgehend von einem vorzugsweise im Wesentlichen längsaxial gerichteten Strömungskanal innerhalb der Hohlwelle ist die oder jede Bohrung radial gerichtet, derart, dass zwischen dem Strömungskanal und dem Ringspalt eine Strömungsverbindung hergestellt ist. Die Strömungsverbindung zwischen dem Strömungskanal und dem Ringspalt kann aber auch auf andere Weise, z.B. über einen spiralförmigen Verlauf des Strömungskanals innerhalb der Hohlwelle im Bereich der Membran, hergestellt sein.

Besonders bevorzugt erstreckt sich der Ringspalt in axialer Längserstreckung der Membran im Wesentlichen über die gesamte Länge der Membran, wobei der Ringspalt an entgegengesetzten Enden der Membran mit Dichtelementen gegenüber der Umgebung abgedichtet ist. Die Dichtelemente stellen sicher, dass der Ringspalt und dadurch auch der gesamte Zirkulationskreislauf gegenüber der Umgebung abgeschirmt/abgetrennt sind. Besonders vorteilhaft ist die Membran mittels Dichtringen gegenüber der Hohlwelle dichtend zu dieser ausgebildet und eingerichtet.

In einer bevorzugten Ausführungsform der Siegelgegenlageanordnung ist der Hohlwelle eine Entlüftungseinrichtung zugeordnet, mittels der der Ringspalt gegenüber der Umgebung entlüftbar ausgebildet und eingerichtet ist. Vorzugsweise umfasst die Entlüftungseinrichtung einen Entlüftungskanal, der einerseits in den Ringspalt mündet und andererseits einen Auslass zur Umgebung, vorzugsweise an einer freien Stirnseite der Hohlwelle, aufweist, wobei in dem Entlüftungskanal ein Entlüftungsröhrchen angeordnet ist, das mittels Federkraft durch ein Federelement in radialer Richtung gegen die Innenfläche der Membran gehalten ist. Das Röhrchen ist durch das Federelement von innen gegen die Membraninnenfläche gedrückt, ragt also radial in den Ringspalt hinein. Zum Fügen der Membran auf die Hohlwelle ist das Röhrchen temporär gegen die Federkraft des Federelementes in eine Bohrung, Ausnehmung oder dergleichen innerhalb der Hohlwelle eingedrückt. Für eine Entlüftung in montiertem Zustand befindet sich die Entlüftungsöffnung des Röhrchens am höchstmöglichen Punkt der Gegenwalze. Anders ausgedrückt nimmt das Röhrchen mit seiner Entlüftungsöffnung aufgrund der Tatsache, dass es von innen gegen die Membran gerückt ist, die am weitesten außen liegende Position ein, die bei einer definierten Stellung/Position der Gegenwalze zur Entlüftung auch die höchste Position sein kann. Durch den Druck des zirkulierenden Kühlmediums werden die verbleibenden Restlufteinschlüsse gelöst und abgeleitet.

Vorzugsweise umfasst die Einrichtung zum Zirkulieren des Kühlmediums eine Pumpeneinheit zum Erzeugen eines definierten Durchflusses im Bereich eines Zulaufs des Kühlmediums in den Strömungskanal und eine Drosseleinheit zum Erzeugen eines Drucks im Kühlmedium im Bereich eines Rücklaufs des Kühlmediums aus dem Strömungskanal. Als Pumpeneinheit ist beispielsweise eine Verdrängerpumpe einsetzbar, mittels der der Durchfluss in Menge und/oder Geschwindigkeit und das Zirkulieren des Kühl- und Druckmediums durch den Strömungskanal in der Hohlwelle zum Ringspalt und zurück gewährleistet sind. Andere den Durchfluss und das Zirkulieren sicherstellende Einrichtungen sind aber ebenfalls einsetzbar. Mittels z.B. eines Drosselventils oder eines Überströmventils als Drosseleinheit kann die Höhe des Drucks des zirkulierenden Kühl- und Druckmediums reguliert werden.

Besonders vorteilhaft sind im Bereich des Rücklaufs in Strömungsrichtung vor der Drosseleinheit mindestens ein Drucksensor und im Bereich des Rücklaufs ein Temperatursensor angeordnet. Mittels des Drucksensors oder mehrerer Drucksensoren oder anderer Detektionsmittel kann der Druck des Kühlmediums innerhalb des Zirkulationskreislaufes zu Zwecken der Überwachung z.B. hinsichtlich Leckagen oder Verstopfungen ermittelt werden. Durch den oder jeden Temperatursensor oder andere Detektionsmittel kann die Temperatur des rückströmenden Kühlmediums ermittelt und z.B. zu Zwecken der Steuerung des Durchflusses des Kühlmediums überwacht werden. Dem durchströmenden bzw. zirkulierenden Kühlmedium wird Energie in Form von Druck zugeführt, um das Formatteil über die Membran an/auf der Hohlwelle zu fixieren. Diese Energie wird beim Durchfließen der Drosseleinheit in Wärme umgewandelt und fällt als kontinuierliche Verlustleistung an. Das geregelte Rückführen des Kühlmediums nach der Drosseleinheit zur Ansaugseite der Pumpeneinheit ermöglicht eine sehr einfache und günstige Implementierung einer Temperierungsfunktion, die für die Verarbeitung ausgewählter Folien (Bodenfolie und/oder Deckfolie) relevant sein kann.

Eine bevorzugte Weiterbildung ist dadurch gekennzeichnet, dass die Pumpeneinheit und/oder die Drosseleinheit und/oder der Drucksensor und/oder der Temperatursensor an eine Steuerungs- und/oder Regelungseinrichtung angeschlossen sind, wobei die Steuerungs- und/oder Regelungseinrichtung zum Steuern- und/oder Regeln der Siegelgegenlageanordnung ausgebildet und eingerichtet ist. Dadurch kann die Siegelgegenlageanordnung bzw. der Siegelvorgang optimal überwacht werden, um schnell und unmittelbar durch Steuern und/oder Regeln des Durchflusses und/oder des Drucks und/oder der Temperatur auf Veränderungen im System reagieren zu können, was zu einer erhöhten Prozesssicherheit führt.

In einer weiteren zweckmäßigen Weiterbildung der erfindungsgemäßen Siegelgegenlageanordnung umfasst das Verbindungsmittel Spannelemente in Form von keilförmigen Ringelementen. Durch den Einsatz von Normteilen ist eine einfache und sichere Verbindung von Formatteil und Hohlwelle gewährleitet. Dadurch, dass die Ringelemente ineinanderschiebar/aufeinanderschiebbar ausgebildet und eingerichtet sind, erfolgt bei einem Spannvorgang der Ringelemente eine radiale Durchmesserveränderung. Bei steigendem Spanndruck vergrößert sich der Durchmesser, bei kleinerem Druck kann sich der Durchmesser wieder reduzieren, indem die Ringelemente aufeinander abgleiten. Durch dieses Verbindungsmittel entsteht in radialer Richtung eine kraftschlüssige Verbindung zwischen der Hohlwelle und dem Formatteil mit flächiger Berührung der Ringelement mit der Innenfläche einerseits und der Außenfläche der Hohlwelle andererseits. Die Ringelemente füllen quasi den Spalt zwischen Hohlwelle und Formatteil aus.

Vorteilhafterweise ist den Spannelementen ein Spannmittel zugeordnet. Mittels des Spannmittels lässt sich auf einfache und sichere Weise der Spanndruck bzw. die Spannkraft auf die Spannelemente variieren. Das Spannmittel kann direkt auf die Spannelemente, also z.B. die Ringelemente wirken. Vorteilhafterweise ist zwischen dem Spannmittel und den Spannelementen ein Drucktopf angeordnet ist, derart, dass die Spannkraft des Spannmittels über den Drucktopf auf die Spannelemente übertragbar ist. Dadurch ist eine ringförmige, verkantungsfreie und somit gleichmäßige Verspannung der Spannelemente sichergestellt.

Vorteilhafterweise ist die Spannkraft mittels eines Federelementes erzeugbar, wobei das Spannmittel gegen das Federelement wirkt. Mit dieser Weiterbildung ist ein Spannsystem geschaffen, das den Drucktopf, das Spannmittel, die Spannelemente, das Federelement und ein Gegenlager umfasst. Das Gegenlager ist am freien Ende der Hohlwelle mit dieser verbunden. Der Drucktopf ist an diesem Gegenlager abgestützt und gegen die Federkraft des Federelementes mittels des Spannmittels in axialer Richtung bewegbar.

In einer bevorzugten Ausführungsform ist im Bereich des freien Endes der Hohlwelle ein Kühlzylinder angeordnet, der zum einen den Strömungskanal der Hohlwelle fortsetzt und zum anderen ein Außengewinde mit großer Steigung aufweist, wobei das Außengewinde mit dem Strömungskanal in Strömungsverbindung steht. Der Kühlzylinder ist quasi in die Hohlwelle eingelassen. Mit anderen Worten weist die Hohlwelle an dem freien Ende eine Bohrung/Ausnehmung auf, in der der Kühlzylinder angeordnet ist, derart, dass das Außengewinde des Kühlzylinders mit der Hohlwelle in Kontakt steht, so dass durch das Außengewinde strömendes Kühlmedium entlang der Hohlwelle strömt. Der Kühlzylinder seinerseits weist an einem freien Ende, das der Hohlwelle abgewandt ist, ebenfalls eine Bohrung/Ausnehmung auf, in der das Gegenlager mit einem umlaufenden Abstand zum Kühlzylinder zur Bildung eines Spaltes positioniert ist. Dieser Spalt steht mit dem Strömungskanal aus der Hohlwelle und dem Außengewinde in Strömungsverbindung.

Vorzugsweise ist die Hohlwelle mittels Lagerkörpern gegenüber einer Lageraufnahme gelagert, die die Schnittstelle zu einem Rahmengestell oder dergleichen bildet. Die Lagerkörper können z.B. Rillenkugellager sein, die die Rotation der Hohlwelle aufnehmen. Dazu sind die Rillenkugellager, vorzugsweise zwei, oder andere geeignete Lagerelemente mit einem Lagerring auf der Hohlwelle und mit dem anderen Lagerring an der Lageraufnahmen angeordnet, wobei die Lageraufnahme ihrerseits fest und vorzugsweise lösbar an dem Rahmengestell, einer Maschinenwand oder dergleichen angeordnet ist.

Die Aufgabe wird auch durch eine Siegelvorrichtung der eingangs genannten Art gelöst, die dadurch gekennzeichnet ist, dass die Siegelgegenlageanordnung nach einem oder mehreren der Ansprüche 1 bis 13 ausgebildet und eingerichtet ist. Die sich daraus ergebenden Vorteile wurden bereits im Zusammenhang mit der Siegelgegenlageanordnung beschrieben, weshalb zur Vermeidung von Wiederholungen auf die entsprechenden Passagen verwiesen wird. Zusammenfassend stellt die Siegelgegenlageanordnung in Verbindung mit der Siegelwalze, also die Siegelvorrichtung, sicher, dass die Anzahl der Wärmeübergänge signifikant verringert ist, optimiert durch die flächige Anlage bis hin zu einem einzigen Wärmeübergang, und dass die Wärmetransportwege auf ein Minimum verkürzt sind, so dass eine konstante Prozesstemperatur für das Siegeln mit hoher Prozessstabilität erreicht wird. Durch die verbesserten Rundlaufeigenschaften der Gegenwalze der Siegelgegenlageanordnung ergibt sich im Zusammenwirken mit der Siegelwalze ein positiver Effekt auf die Siegelkraft, die gleichmäßig aufbringbar ist.

Die Aufgabe wird weiterhin durch eine Vorrichtung zum Herstellen von Blisterverpackungen mit den eingangs genannten Merkmalen gelöst, die dadurch gekennzeichnet ist, dass die Siegelvorrichtung nach Anspruch 14 ausgebildet und eingerichtet ist. Die sich daraus ergebenden Vorteile wurden bereits im Zusammenhang mit der Siegelgegenlageanordnung beschrieben, weshalb zur Vermeidung von Wiederholungen auf die entsprechenden Passagen verwiesen wird.

Weitere zweckmäßige und/oder vorteilhafte Merkmale und Weiterbildung zur Siegelgegenlageanordnung, zur Siegelvorrichtung sowie zur Vorrichtung zum Herstellen von Blisterverpackungen ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer Siegelvorrichtung mit einer Siegelwalze und einer Siegelgegenlageanordnung als Gegenwalze,
- Fig. 2: eine schematische Darstellung einer erfindungsgemäßen Grundkonstruktion der Siegelgegenlageanordnung im Schnitt,
- Fig. 3: eine schematische Darstellung einer weiteren Ausführungsform der Siegelgegenlageanordnung mit Spannelementen als Verbindungsmittel zwischen Hohlwelle und Formatteil im Schnitt,
- Fig. 4: eine schematische Darstellung einer weiteren besonders bevorzugten Ausführungsform der Siegelgegenlageanordnung mit einer Membran als Verbindungsmittel zwischen Hohlwelle und Formatteil im Schnitt, wobei der Ringspalt durch einen Abstand zwischen Mantelfläche der Hohlwelle und Innenfläche der Membran gebildet ist,
- Fig. 5: eine vergrößerte Darstellung einer weiteren bevorzugten Ausführungsform der Siegelgegenlageanordnung mit einer Membran als Verbindungsmittel zwischen Hohlwelle und Formatteil im Schnitt, wobei der Ringspalt durch eine wendelförmige Nut in der Mantelfläche der Hohlwelle und die Innenfläche der Membran gebildet ist, und

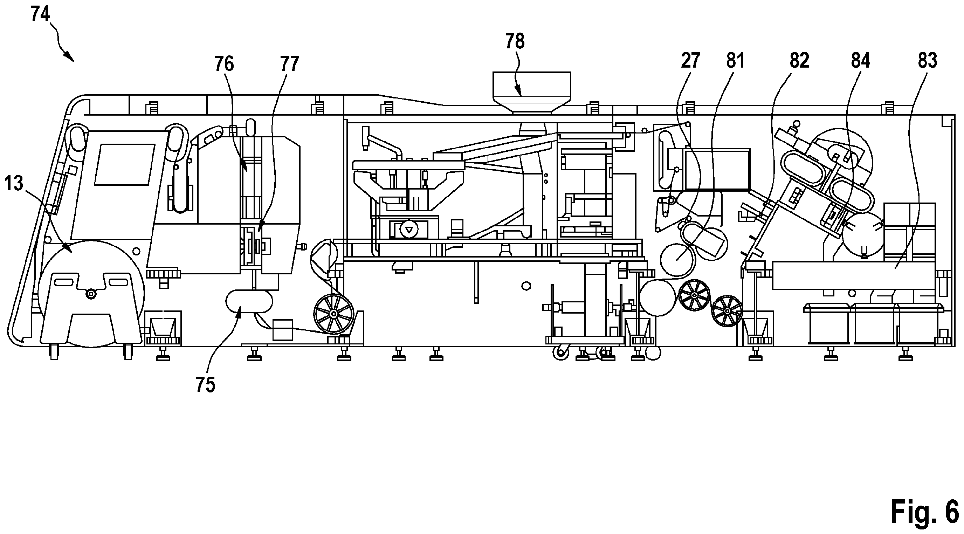

- Fig. 6: eine schematische Darstellung einer Vorrichtung zum Herstellen von Blisterverpackungen im Schnitt.

Die in der Zeichnung dargestellte Siegelgegenlageanordnung als Bestandteil der Siegelvorrichtung dient in einer Vorrichtung zum Herstellen von Blisterverpackungen zum Erzeugen einer Siegelnaht zwischen der Bodenfolie und der Deckfolie. Die Breite der Siegelnaht und damit die Breite von Bodenfolie und Deckfolie einerseits sowie die Ausbildung der Bodenfolie hinsichtlich der Größe und des Musters der Blisterhöfe andererseits kann innerhalb der Vorrichtung zum Herstellen der Blisterverpackungen variieren, weshalb das Formatteil der Siegelgegenlageanordnung austauschbar ist.

Die Erfindung betrifft eine Siegelgegenlageanordnung 10, die zum Herstellen einer Siegelverbindung zwischen einer napfförmige Blisterhöfe 12 aufweisenden Bodenfolie 13 und einer Deckfolie 14 in Wirkverbindung mit einer Siegelwalze 11 bringbar ist.. Die Siegelgegenlageanordnung 10 umfasst eine Aufnahmevorrichtung 15 mit einer rotierend antreibbaren, einen Strömungskanal 16 aufweisenden Hohlwelle 17, die Hohlwelle 17 bildet die Aufnahmevorrichtung 15, eine Antriebseinheit 18 zum Antreiben der Hohlwelle 17, ein Formatteil 19, das mindestens abschnittsweise hohlzylindrisch ausgebildet ist, derart, dass es auf ein freies Ende 20 der Hohlwelle 17 aufgesetzt ist, wobei das Formatteil 19 gegenüber der Hohlwelle 17 drehfest und lösbar mit dieser verbunden ist und außenseitig auf der Mantelfläche M₁ Vertiefungen 21 aufweist, die zur Aufnahme der Blisterhöfe 12 der Bodenfolie 13 ausgebildet und eingerichtet sind, und wobei der Aufnahmevorrichtung 15 eine Einrichtung 22 zum Zirkulieren eines Kühlmediums in dem Strömungskanal 16 zum Kühlen mindestens von Teilen des Formatteils 19 zugeordnet ist, wobei die Einrichtung 22 zum Zirkulieren des Kühlmediums, bevorzugt über eine Drehdurchführung 23 an einem dem Formatteil 19 entgegengesetzten, anderen freien Ende 24 der Hohlwelle 17, an den Strömungskanal 16 angeschlossen ist, wobeidas Formatteil 19 eine hohlzylindrische Hülsenform aufweist, derart, dass die radiale Innenfläche des Formatteils 19 durchgängig zylindrisch ausgebildet ist, und dass zwischen der äußeren Mantelfläche M₂ der Hohlwelle 17 und der zylindrischen Innenfläche des Formatteils 19 ein radialer Spalt 25 ausgebildet ist, in dem ein im Wesentlichen radial wirkendes Verbindungsmittel 26 angeordnet ist. Erfindungsgemäß ist damit unterhalb der Vertiefungen 21 der Mantelfläche M₁ des Formatteils 19, also auf der den Vertiefungen 21 gegenüberliegenden Innenseite, eine durchgängig zylindrische Innenfläche geschaffen.

Die im Folgenden beschriebenen Merkmale und Weiterbildungen stellen für sich betrachtet und in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Siegelgegenlageanordnung 10 weiterbilden können.

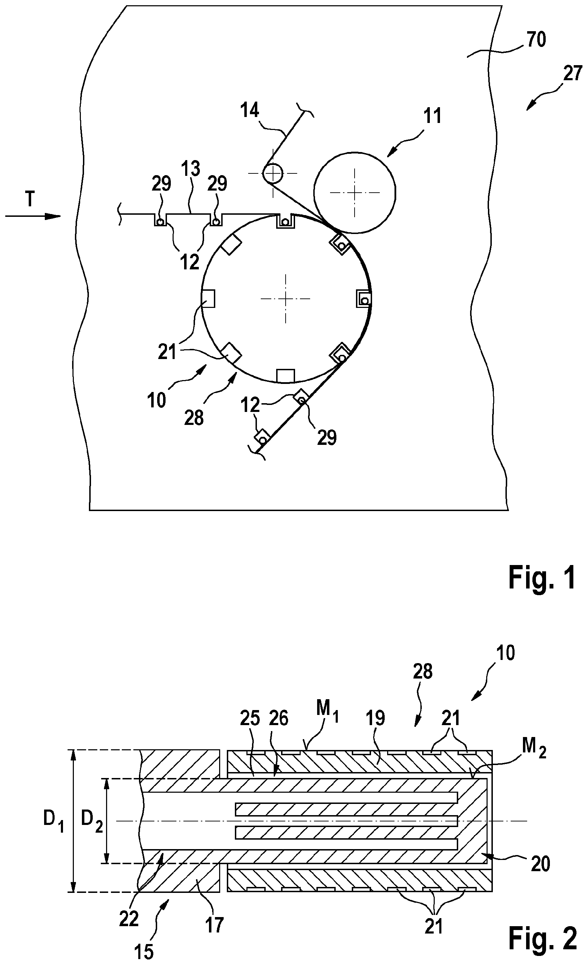

Zum besseren Verständnis der Erfindung wird das grundsätzliche Funktionsprinzip einer Siegelvorrichtung 27, in der die Siegelgegenlageanordnung 10 und die Siegelwalze 11 miteinander in Wirkverbindung bringbar sind, anhand der Figur 1 erläutert. Die Siegelvorrichtung 27 umfasst die Siegelwalze 11 sowie eine Gegenwalze 28 als Bestandteil der Siegelgegenlageanordnung 10. Die Siegelwalze 11 und die Gegenwalze 28 rotieren im Betriebsmodus kontinuierlich. Beide Walzen können separat angetrieben sein. Vorzugsweise ist nur die Gegenwalze 28 angetrieben, und die Siegelwalze 11 rollt auf der Gegenwalze 28 ab. Zum Siegeln wird die zuvor mit Blisterhöfen 12 versehene Bodenfolie 13 in Transportrichtung T gefördert. Nach dem Dosieren einzelner Produkte 29 in die Blisterhöfe 12 wird die befüllte Bodenfolie 13 auf die Gegenwalze 28 geführt, derart, dass die Bodenfolie 13 die Gegenwalze 28 - vorzugsweise um mehr als 90° - umschlingt. Von oben wird die Deckfolie 14 in den Bereich der Gegenwalze 28 geführt und zu der Bodenfolie 13 ausgerichtet. Dieser aus Bodenfolie 13 und Deckfolie 14 gebildete Folienverbund wird gesiegelt, indem die Siegelwalze 11 auf den über die Gegenwalze 28 geführten und geförderten Folienverbund abgesenkt wird. Damit die in den Blisterhöfen 12 liegenden Produkte 29 vom Siegelvorgang ausgeschlossen werden, liegen diese in den Vertiefungen 21 der Gegenwalze 28. Durch den Formschluss zwischen der Bodenfolie 13 und der Gegenwalze 28 kann das Fördern der Bodenfolien 13 mindestens abschnittsweise unterstützt werden. Beim Siegelvorgang selbst bringt die Siegelwalze 11 Wärme in das System ein. Diese Wärme wird zum Schutz der Produkte 29 in der Bodenfolie 13 mindestens teilweise von der Gegenwalze 28 abgeführt, indem die Gegenwalze 28 mittels der Einrichtung 22 zum Zirkulieren eines Kühlmediums aktiv gekühlt wird.

Wie beschrieben, umschlingt die Bodenfolie 13 beim Siegelvorgang die Gegenwalze 28 teilweise. Genauer liegt die Bodenfolie 13 auf der äußeren Mantelfläche M₁ des Formatteils 19 an. Vom Formatteil 19 wird die Wärme der Siegelwalze 11 auf die Hohlwelle 17 übertragen, der die Einrichtung 22 zum Zirkulieren des Kühlmediums zugeordnet ist. Für eine optimierte Wärmeübertragung bzw. Wärmeableitung ist eine geringe Anzahl von Wärmeübergängen mit einer gleichmäßigen und flächigen Kontaktfläche angestrebt. Entsprechend ist das Formatteil 19 vorzugsweise durchgängig hohlzylindrisch ausgebildet und in seiner axialen Erstreckung vollständig auf das freie Ende 20 der Hohlwelle 17 aufgesetzt, derart, dass das Formatteil 19 mit seiner gesamten Innenfläche die Hohlwelle 17 radial umgibt. In der Figur 2 ist das Grundprinzip der Anordnung vom Formatteil 19 auf der Hohlwelle 17 dargestellt. In diesem Beispiel ist die Hohlwelle 17 gestuft ausgebildet, derart, dass es einen Abschnitt mit einem Durchmesser D₁ und einen Abschnitt mit dem Durchmesser D₂ gibt, mit D₁>D₂. Auf den Abschnitt der Hohlwelle 17 mit dem Durchmesser D₂ ist das hülsenartige Formatteil 19 vollständig aufgesteckt. Der Strömungskanal 16 erstreckt sich durch die gesamte Hohlwelle 17 bis in den Abschnitt mit dem Durchmesser D₂, so dass das Formatteil 19 über die gesamte Innenfläche gleichmäßig gekühlt wird. Letztlich wird die Wärme über das Formatteil 19 und das in dem Spalt 25 befindliche Verbindungsmittel 26 an die Hohlwelle 17 übertragen.

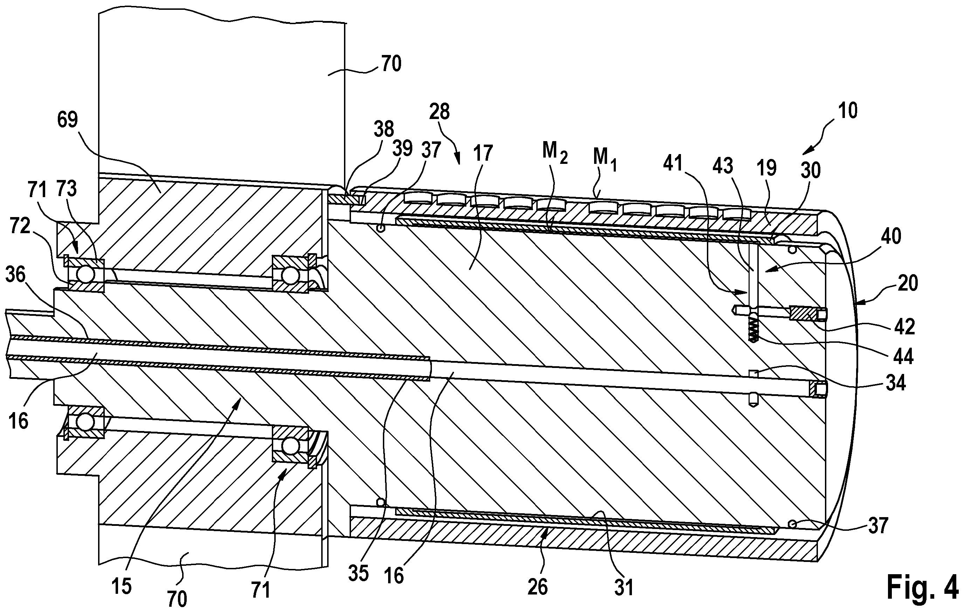

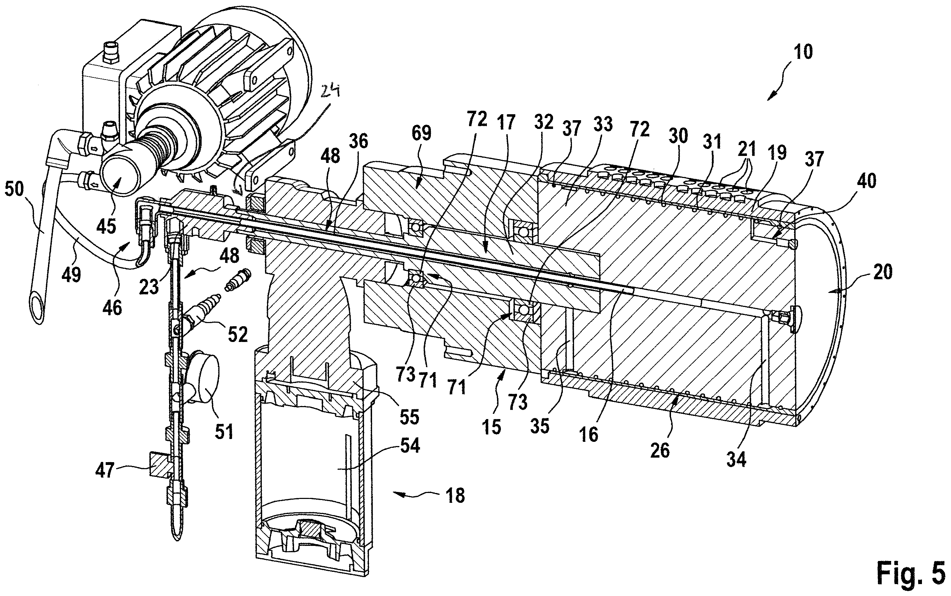

Als besonders vorteilhaft hat sich gezeigt, dass das Verbindungsmittel 26 eine vorzugsweise aus Metall gebildete Membran 30 umfasst, die zwischen der äußeren Mantelfläche M₂ der Hohlwelle 17 und der Innenfläche des Formatteils 19 angeordnet ist, wobei zwischen der Innenfläche der Membran 30 und der äußeren Mantelfläche M₂ der Hohlwelle 17 ein umlaufender Ringspalt 31 ausgebildet ist, der mit dem Strömungskanal 16 der Hohlwelle 17 in Strömungsverbindung steht (siehe insbesondere Figuren 4 und 5). In der Ausführungsform gemäß Figur 4 ist der Ringspalt 31 durch einen Abstand zwischen der äußeren Mantelfläche M₂ der Hohlwelle 17 und der Innenfläche der Membran 30 ausgebildet. In der Ausführungsform gemäß Figur 5 ist der Ringspalt 31 durch bzw. zwischen einer wendelförmigen/spiralförmigen Nut in der Mantelfläche M₂ der Hohlwelle 17, die Nut kann auch ein Gewinde sein, und der Innenfläche der Membran 30 ausgebildet. Vorzugsweise sind die Membran 30 und die Hohlwelle 17 miteinander verschweißt, so dass eine kraftschlüssige und stoffschlüssige Verbindung hergestellt ist. Die Membran 30 kann aber beispielsweise auch auf die Hohlwelle 17 aufgeschrumpft sein. Letztlich ist das freie Ende 20 der Hohlwelle 17 mit der Membran 30 überzogen.

Dazu ist die Membran 30 mindestens abschnittsweise und bevorzugt vollständig als ein dünnwandiges Rohr ausgebildet, wobei das Material, aus dem die Membran hergestellt ist, vorzugsweise dem Material entspricht, aus dem die Hohlwelle 17 mindestens im Bereich der Mantelfläche M₂ hergestellt ist. Die Hohlwelle 17 kann vollständig aus dem Material hergestellt sein, aus dem auch die Membran 30 hergestellt ist. Ein Grundkörper 32 der Hohlwelle 17 kann aber auch aus einem anderen Material bestehen als die Membran 30, wobei dann z.B. ein Aufsatz 33 oder eine Oberfläche der Hohlwelle 17 aus dem Material besteht bzw. mit dem Material beschichtet ist, aus dem auch die Membran 30 besteht. Andere Materialkombinationen und Materialien, z.B. Kunststoffe, sind aber ebenfalls einsetzbar. Das ausgewählte Material sollte, zumindest was die Membran 30 betrifft, mindestens begrenzt elastisch verformbar sein. Besonders vorteilhaft sind Materialien/Werkstoffe mit hoher Wärmeleitfähigkeit und einem geringen Elastizitätsmodul.

Wie bereits erwähnt, existiert zwischen dem Strömungskanal 16 und dem Ringspalt 31 eine Strömungsverbindung für das Kühlmedium. Im gezeigten Beispiel sind der Strömungskanal 16 und der Ringspalt 31 über mindestens eine Bohrung 34, vorzugsweise über mehrere Bohrungen, miteinander verbunden. Der Zulauf des zirkulierenden Kühlmediums erfolgt durch den Strömungskanal 16 über die oder jede Bohrung 34 in den Ringspalt 31, wo das Kühlmedium die Innenseite der Membran 30 passiert. Der Rücklauf erfolgt über eine oder mehrere Bohrungen 35 zu einem Auslaufkanal 36. Durch den Druck des Kühlmediums kann die Membran 30 hydraulisch aufgeweitet werden, so dass eine kraftschlüssige Verbindung zum Formatteil 19 herstellbar ist. Vorzugsweise erstreckt sich der Ringspalt 31 in axialer Längserstreckung der Membran 30 im Wesentlichen über die gesamte Länge der Membran 30, wobei der Ringspalt 31 an entgegengesetzten Enden der Membran 30 mit Dichtelementen gegenüber der Umgebung abgedichtet ist. Besonders vorteilhaft ist die Membran 30 mittels Dichtringen 37 gegenüber der Hohlwelle 17 dichtend zu dieser ausgebildet und eingerichtet. Dadurch wird die Zirkulation des Kühlmediums gegenüber der Umgebung abgeschlossen.

Um das Formatteil 19 in der richtigen Position auf der Hohlwelle 17 (siehe z.B. Figur 4) bzw. dem Aufsatz 33 (siehe z.B. Figur 5) zu positionieren, ist eine Positioniereinrichtung vorgesehen, die im dargestellten Beispiel einen Positionierstift 38 umfasst. Der Positionierstift 38 korrespondiert zu einer Ausnehmung bzw. einer Bohrung 39 im Formatteil 19. Selbstverständlich sind auch andere übliche Positioniereinrichtungen einsetzbar. Optional ist der Hohlwelle 17 bzw. genauer der Gegenwalze 28 eine Entlüftungseinrichtung 40 zugeordnet, mittels der der Ringspalt 31 und damit die gesamte Anordnung gegenüber der Umgebung entlüftbar ausgebildet und eingerichtet ist. Eine mögliche Ausführung der Entlüftungseinrichtung 40 sieht vor, dass sie einen Entlüftungskanal 41 umfasst, der einerseits in den Ringspalt 31 mündet und andererseits einen Auslass 42 zur Umgebung, vorzugsweise an einer freien Stirnseite der Hohlwelle 17, aufweist, wobei in dem Entlüftungskanal 41 ein Entlüftungsröhrchen 43 angeordnet ist, das mittels Federkraft durch ein Federelement 44 in radialer Richtung gegen die Innenfläche der Membran 30 gehalten ist. Andere übliche Maßnahmen zur Entlüftung sind aber ebenfalls einsetzbar.

Um innerhalb der Siegelgegenlageanordnung 10 einen Kühlkreislauf zum Ableiten der von der Siegelwalze 11 eingeleiteten Wärme aufrechtzuerhalten und/oder einen ausreichenden Druck des Kühlmediums aufrechtzuerhalten, um das Formatteil 19 an der Hohlwelle 17 zu fixieren, umfasst die Einrichtung 22 zum Zirkulieren des Kühlmediums eine Pumpeneinheit 45 zum Erzeugen eines definierten Durchflusses im Bereich eines Zulaufs 46 des Kühlmediums in den Strömungskanal 16 und eine Drosseleinheit 47 zum Erzeugen eines Drucks im Kühlmedium im Bereich eines Rücklaufs 48 des Kühlmediums aus dem Strömungskanal 16. Die Pumpeneinheit 45 kann z.B. eine Verdrängerpumpe sein. Jede andere übliche Pumpe ist jedoch ebenfalls einsetzbar. Die Pumpeneinheit 45 ist über eine Zuleitung 49 an der Drehdurchführung 23 angeschlossen. Über einen Ansaugstutzen 50 kann das Kühlmedium, z.B. Wasser mit oder ohne Zusatz, aus einem nicht dargestellten Reservoir entnommen werden.

Anstelle von Wasser kann z.B. auch ein Gas oder eine Gasmischung als Kühlmedium eingesetzt werden.

Bei der bevorzugten Ausführungsform der Siegelgegenlageanordnung 10 gemäß Figur 5 sind im Bereich des Rücklaufs 48 in Strömungsrichtung vor der Drosseleinheit 47 mindestens ein Drucksensor 51 und im Bereich des Rücklaufs 48 ein Temperatursensor 52 angeordnet. Um die einzelnen Komponenten und somit die Siegelgegenlageanordnung 10 steuern und/oder regeln zu können, sind die Pumpeneinheit 45 und/oder die Drosseleinheit 47 und/oder der Drucksensor 51 und/oder der Temperatursensor 52 an eine nicht explizit dargestellte Steuerungs-und/oder Regelungseinrichtung angeschlossen, wobei die Steuerungs- und/oder Regelungseinrichtung zum Steuern- und/oder Regeln der Siegelgegenlageanordnung 10 ausgebildet und eingerichtet ist. Dazu kann die Steuerungs- und/oder Regelungseinrichtung z.B. ein Mikroprozessorsystem mit entsprechenden Schnittstellen zum Austausch von Daten zwischen dem Mikroprozessorsystem und der Siegelgegenlageanordnung 10 und deren Komponenten umfassen. Die Steuerungs-und/oder Regelungseinrichtung kann separat für die Siegelgegenlageanordnung 10 vorgesehen oder Bestandteil einer übergeordneten Vorrichtung sein, z.B. der Siegelvorrichtung 27 oder der Vorrichtung 74 zum Herstellen von Blisterverpackungen. Die Siegelgegenlageanordnung 10 weist weiterhin die Antriebseinheit 18 auf. Die Antriebseinheit 18 kann beispielsweise einen Servomotor 54 und ein Winkelgetriebe 55 umfassen. Andere übliche Antriebssysteme sind aber ebenfalls einsetzbar. Auch die Antriebseinheit 18 kann an die Steuerungs- und/oder Regelungseinrichtung angeschlossen sein.

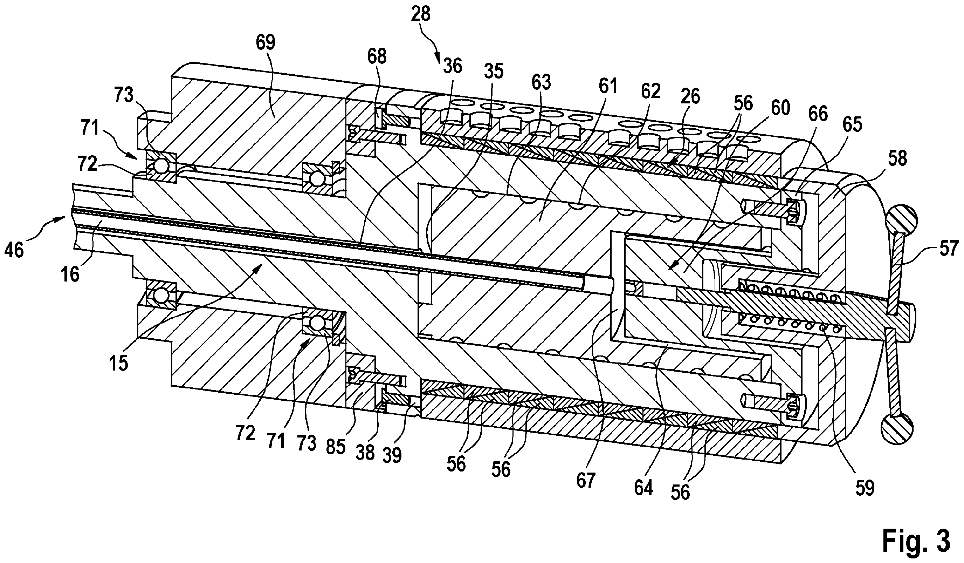

In einer weiteren Ausführungsform (siehe insbesondere Figur 3) ist eine Siegelgegenlageanordnung 10 vorgesehen, bei der das Verbindungsmittel 26 Spannelemente in Form von keilförmigen Ringelementen 56 umfasst. Mehrere Ringelemente 56 sind in dem Spalt 25 angeordnet. Jeweils zwei Ringelemente 56 gleiten aufeinander. Mit anderen Worten sind die Ringelemente 56 zur Veränderung des Durchmessers des Verbindungsmittels 26 insgesamt gegeneinander verschiebbar. Durch die Ringelemente 56 ist eine kraftschlüssige Verbindung zwischen der Hohlwelle 17 und dem Formatteil 19 hergestellt. Den Spannelementen bzw. den Ringelementen 56, die umlaufend an der Hohlwelle 17 anliegen, ist ein Spannmittel 57 zugeordnet. Durch das Aufbringen einer Spannkraft verschieben sich die Ringelemente 56 derart, dass eine Durchmesservergrößerung erfolgt. Die Reduzierung der Spannkraft hat den entgegengesetzten Effekt. Das Spannmittel 57 kann direkt auf die Ringelemente 56 wirken. Bevorzugt ist zwischen dem Spannmittel 57 und den Spannelementen bzw. den Ringelementen 56 ein Drucktopf 58 angeordnet, derart, dass die Spannkraft des Spannmittels 57 über den Drucktopf 58 quasi ringförmig auf die Spannelemente bzw. Ringelemente 56 übertragbar ist.

In einer bevorzugten Ausführungsform ist die Spannkraft mittels eines Federelementes 59 erzeugbar, wobei das Spannmittel 57 gegen das Federelement 59 wirkt. Mittels des Spannmittels 57 ist der Drucktopf 58 über das Federelement 59 bzw. gegen die Federkraft des Federelemente 59 in axialer Richtung gegen die Ringelemente 56 zur Erzeugung einer radialen Spannkraft der Ringelemente 56 drückbar. Optional umfasst das Spannsystem neben dem Spannmittel 57, dem Drucktopf 58 und dem Federelement 59 ein Gegenlager 60. Das Gegenlager 60 ist an einem freien Ende 20 der Hohlwelle 17 an dieser befestigt. Im Bereich des freien Endes 20 der Hohlwelle 17 ist des Weiteren ein Kühlzylinder 61 angeordnet, der zum einen den Strömungskanal 16 der Hohlwelle 17 fortsetzt und zum anderen ein Außengewinde 62 mit großer Steigung aufweist, wobei das Außengewinde 62 mit dem Strömungskanal 16 in Strömungsverbindung steht.

Die Hohlwelle 17 weist dazu an ihrem freien Ende 20 eine zylinderförmige Ausnehmung/Bohrung 63 auf, in der der Kühlzylinder 61 angeordnet ist. Der Kühlzylinder 61 seinerseits weist ebenfalls an einem freien Ende eine zylinderförmige Ausnehmung/Bohrung 64 auf, in der das Gegenlager 60 positioniert ist. Genauer taucht das Gegenlager 60, das mit einem kragenförmigen Rand 65 an der Stirnseite der Hohlwelle 17 befestigt ist, mit einem schaftförmigen Abschnitt 66 in die Ausnehmung/Bohrung 64 des Kühlzylinders 61 ein, jedoch zu allen Seiten beabstandet zu der Innenfläche der Ausnehmung/Bohrung 64. Dadurch ist ein Spalt 67 gebildet, der mit dem Strömungskanal 16 und dem Außengewinde 62 in Strömungsverbindung steht. Das Außengewinde 62 steht des Weiteren mit der Bohrung 35 in Strömungsverbindung, um eine Zirkulation des Kühlmediums vom Zulauf durch den Strömungskanal 16 über den Spalt 67 und das Außengewinde 62 zum Auslaufkanal 36 zu gewährleisten. Beim Zirkulieren strömt das Kühlmedium durch den Strömungskanal 16 in den Kühlzylinder 61, umspült das Gegenlager 60 und gelangt so in das Außengewinde 62, das quasi ein Kühlgewinde darstellt.

Ebenso wie in der anderen Ausführungsform ist eine Zentriereinrichtung vorgesehen, die im dargestellten Beispiel einen Zentrierstift 38 umfasst. Der Zentrierstift 38 korrespondiert zu einer Ausnehmung bzw. einer Bohrung 39 im Formatteil 19. Des Weiteren ist zwischen dem Formatteil 19 an dem Ende, das dem Spannmittel 57 entgegengesetzt ist, und der Hohlwelle 17 bzw. einem an der Hohlwelle 17 befestigten einem Stützring 85 ein Ringspalt 68 ausgebildet. Durch Beaufschlagung des Ringspalte 68 z.B. mittels Druckluft lässt sich das Formatteil 19 von der Hohlwelle 17 lösen.

In allen Fällen bzw. allen Ausführungsformen der Siegelgegenlageanordnung 10 ist die Hohlwelle 17 mittels Lagerkörpern gegenüber einer Lageraufnahme 69 gelagert, die die Schnittstelle zu einem Rahmengestell 70 oder dergleichen bildet. Die Lagerkörper sind vorzugsweise Rillenkugellager 71, von denen jeweils ein Lagerring 72 auf der Hohlwelle 17 und der andere Lagerring 73 an der Lageraufnahme 69 positioniert ist.

Wie ausführlich zuvor beschrieben, ist die Siegelgegenlageanordnung 10 als separate Einheit zu betrachten. Die eigentliche Funktionalität des Siegelvorgangs wird jedoch in der Wirkverbindung mit der Siegelwalze 11 erzielt, weshalb im Folgenden die Siegelvorrichtung 27 beschrieben wird. Diese ist ausgebildet und eingerichtet zum Siegeln einer Deckfolie 14 auf eine mit napfförmigen Blisterhöfen 12 versehene Bodenfolie 13 zur Aufnahme von Produkten 29, umfassend ein Rahmengestell 70, mindestens eine am Rahmengestell 70 gelagerte und beheizbare Siegelwalze 11 sowie für jede Siegelwalze 11 eine am Rahmengestell 70 gelagerte Siegelgegenlageanordnung 10 mit einer mindestens eine Hohlwelle 17 und ein Formatteil 19 umfassenden Gegenwalze 28, wobei die Siegelwalze 11 zur Erzeugung einer Siegelkraft relativ zur Gegenwalze 28 aus einer Warteposition in eine Arbeitsposition auf diese zu und zurück bewegbar ausgebildet und eingerichtet ist. Die erfindungsgemäße Siegelvorrichtung 27 zeichnet sich dadurch aus, dass die Siegelgegenlageanordnung 10 nach einem oder mehreren der Ansprüche 1 bis 13 ausgebildet und eingerichtet ist.

Das Rahmengestell 70 kann z.B. eine Maschinenwand sein. Das Rahmengestell 70 kann aber auch jede andere Art von Gerüst, Gehäuse oder dergleichen sein. Die Siegelwalze 11 ist über einen Stellmechanismus am Rahmengestell 70 gelagert. Mittels des Stellmechanismus ist die Siegelwalze 11 aus der Warteposition in die Arbeitsposition und zurück bewegbar. Der Stellmechanismus kann z.B. eine Hebelmechanik umfassen. Beispielsweise kann an jedem freien Ende ein Hebelarm angeordnet sein, der mittels eines Betätigungsmittels, beispielsweise eines Pneumatikzylinders, betätigbar ist. Vorzugsweise ist die Länge der Hebelarme einstellbar, um (Fertigungs-)Toleranzen ausgleichen zu können. In der Arbeitsposition entsteht eine linienförmige Berührung zwischen der Siegelwalze 11 und der Gegenwalze 28. Dadurch entsteht über die Breite des Folienverbundes die Siegelnaht.

Die Siegelvorrichtung 27 kann als separate Einheit zum Siegeln von Blisterverpackungen eingesetzt werden. Selbstverständlich kann die Siegelvorrichtung 27 auch zum Siegeln anderer Folienverpackungen eingesetzt werden, die aus siegelfähigen Materialien bestehen. Bevorzugt ist die Siegelvorrichtung 27 jedoch Bestandteil einer Vorrichtung 74 zum Herstellen von Blisterverpackungen. Diese Vorrichtung 74 umfasst eine Transportvorrichtung 75 zum Fördern einer Bodenfolie 13 in Transportrichtung T, eine Vorwärmstation 76 zum Erwärmen der Bodenfolie 13, eine Tiefziehstation 77 zum Ausbilden napfförmiger Blisterhöfe 12 in der Bodenfolie 13, eine Vorrichtung 78 zum Dosieren von Produkten 29 in den Blisterhöfen 12, eine Vorrichtung zum Zuführen einer Deckfolie 14, eine Siegelvorrichtung 27 zum Herstellen eines Siegelverbundes zwischen der mit Produkten 29 bestückten Bodenfolie 13 und der Deckfolie 14, und eine Vorrichtung zum Vereinzeln einzelner Blisterverpackungen vom Siegelverbund. Diese Vorrichtung 74 zeichnet sich erfindungsgemäß dadurch aus, dass die Siegelvorrichtung 27 nach Anspruch 14 ausgebildet und eingerichtet ist.

In Transportrichtung T hinter der Siegelvorrichtung 27 kann eine Kühleinrichtung 81, z.B. in Form einer Kühlwalze, angeordnet sein, um den gesiegelten Folienverbund zu kühlen. Des Weiteren kann sich eine Station 82 zum Bedrucken und/oder Perforieren der Blisterverpackungen anschließen, ebenso wie eine Transportvorrichtung 83 zum Abtransport der hergestellten Blisterverpackungen. Um aus dem endlosen Folien-/Siegelverbund einzelne Blisterverpackungen zu gewinnen, ist eine Schneidvorrichtung 84 vorgesehen. Die bei der Herstellung anfallenden Reste, Fehlprodukte und dergleichen können in separaten Behältern gesammelt und abtransportiert werden. Vorzugseise umfasst die Vorrichtung 74 eine Steuerungs- und/oder Regelungseinrichtung zum Steuern und/oder Regeln des gesamten Herstellungsprozesses oder einzelner Herstellungsschritte.

## Patentansprüche

1. Siegelgegenlageanordnung (10), die zum Herstellen einer Siegelverbindung zwischen einer napfförmige Blisterhöfe (12) aufweisenden Bodenfolie (13) und einer Deckfolie (14) in Wirkverbindung mit einer Siegelwalze (11) bringbar ist, **gekennzeichnet durch** eine Aufnahmevorrichtung (15) mit einer rotierend antreibbaren, einen Strömungskanal (16) aufweisenden Hohlwelle (17), eine Antriebseinheit (18) zum Antreiben der Hohlwelle (17), ein Formatteil (19), das mindestens abschnittsweise hohlzylindrisch ausgebildet ist, derart, dass es auf ein freies Ende (20) der Hohlwelle (17) aufgesetzt ist, wobei das Formatteil (19) gegenüber der Hohlwelle (17) drehfest und lösbar mit dieser verbunden ist und außenseitig auf der Mantelfläche Vertiefungen (21) aufweist, die zur Aufnahme der Blisterhöfe (12) der Bodenfolie (13) ausgebildet und eingerichtet sind, und wobei der Aufnahmevorrichtung (15) eine Einrichtung (22) zum Zirkulieren eines Kühlmediums in dem Strömungskanal (16) zum Kühlen mindestens von Teilen des Formatteils (19) zugeordnet ist, wobei die Einrichtung (22) zum Zirkulieren des Kühlmediums, bevorzugt über eine Drehdurchführung (23) an einem dem Formatteil (19) entgegengesetzten, anderen freien Ende (24) der Hohlwelle (17), an den Strömungskanal (16) angeschlossen ist, wobei das Formatteil (19) eine hohlzylindrische Hülsenform aufweist, derart, dass die radiale Innenfläche des Formatteils (19) durchgängig zylindrisch ausgebildet ist, und dass zwischen der äußeren Mantelfläche der Hohlwelle (17) und der zylindrischen Innenfläche des Formatteils (19) ein radialer Spalt (25) ausgebildet ist, in dem ein im Wesentlichen radial wirkendes Verbindungsmittel (26) angeordnet ist.

2. Siegelgegenlageanordnung (10) nach Anspruch 1, **dadurch gekennzeichnet, dass** das Formatteil (19) durchgängig hohlzylindrisch ausgebildet und in seiner axialen Erstreckung vollständig auf das freie Ende (20) der Hohlwelle (17) aufgesetzt ist, derart, dass das Formatteil (19) mit seiner gesamten Innenfläche die Hohlwelle (17) radial umgibt.

3. Siegelgegenlageanordnung (10) nach Anspruch 1 oder 2, **dadurch gekennzeichnet, dass** das Verbindungsmittel (26) eine vorzugsweise aus Metall gebildete Membran (30) umfasst, die zwischen der äußeren Mantelfläche der Hohlwelle (17) und der Innenfläche des Formatteils (19) angeordnet ist, wobei zwischen der Innenfläche der Membran (30) und der äußeren Mantelfläche der Hohlwelle (17) ein umlaufender Ringspalt (31)ausgebildet ist, der mit dem Strömungskanal (16) der Hohlwelle (17) in Strömungsverbindung steht.

4. Siegelgegenlageanordnung (10) nach Anspruch 3, **dadurch gekennzeichnet, dass** die Membran (30) mindestens teilweise als ein dünnwandiges Rohr ausgebildet ist, wobei das Material, aus dem die Membran (30) hergestellt ist, dem Material entspricht, aus dem die Hohlwelle (17) mindestens im Bereich der Mantelfläche hergestellt ist.

5. Siegelgegenlageanordnung (10) nach Anspruch 3 oder 4, **dadurch gekennzeichnet, dass** der Strömungskanal (16) und der Ringspalt (31) über mindestens eine Bohrung (34), vorzugsweise über mehrere Bohrungen, miteinander verbunden sind.

6. Siegelgegenlageanordnung (10) nach einem oder mehreren der Ansprüche 3 bis 5, **dadurch gekennzeichnet, dass** sich der Ringspalt (31) in axialer Längserstreckung der Membran (30) im Wesentlichen über die gesamte Länge der Membran (30) erstreckt, wobei der Ringspalt (31) an entgegengesetzten Enden der Membran (30) mit Dichtelementen gegenüber der Umgebung abgedichtet ist.

7. Siegelgegenlageanordnung (10) nach einem oder mehreren der Ansprüche 3 bis 6, **dadurch gekennzeichnet, dass** die Membran (30) mittels Dichtringen (37) gegenüber der Hohlwelle (17) dichtend zu dieser ausgebildet und eingerichtet ist.

8. Siegelgegenlageanordnung (10) nach einem oder mehreren der Ansprüche 3 bis 7, **dadurch gekennzeichnet, dass** der Hohlwelle (17) eine Entlüftungseinrichtung (40) zugeordnet ist, mittels der der Ringspalt (31) gegenüber der Umgebung entlüftbar ausgebildet und eingerichtet ist.

9. Siegelgegenlageanordnung (10) nach Anspruch 8, **dadurch gekennzeichnet, dass** die Entlüftungseinrichtung (40) einen Entlüftungskanal (41) umfasst, der einerseits in den Ringspalt (31) mündet und andererseits einen Auslass (42) zur Umgebung, vorzugsweise an einer freien Stirnseite der Hohlwelle (17), aufweist, wobei in dem Entlüftungskanal (41) ein Entlüftungsröhrchen (43) angeordnet ist, das mittels Federkraft durch ein Federelement (44) in radialer Richtung gegen die Innenfläche der Membran (30) gehalten ist.

10. Siegelgegenlageanordnung (10) nach einem oder mehreren der Ansprüche 1 bis 9, **dadurch gekennzeichnet, dass** die Einrichtung (22) zum Zirkulieren des Kühlmediums eine Pumpeneinheit (45) zum Erzeugen eines definierten Durchflusses im Bereich eines Zulaufs (46) des Kühlmediums in den Strömungskanal (16) und eine Drosseleinheit (47) zum Erzeugen eines Drucks im Kühlmedium im Bereich eines Rücklaufs (48) des Kühlmediums aus dem Strömungskanal (16) umfasst.

11. Siegelgegenlageanordnung (10) nach Anspruch 1 oder 2, **dadurch gekennzeichnet, dass** das Verbindungsmittel (26) Spannelemente in Form von keilförmigen Ringelementen (56) umfasst.

12. Siegelgegenlageanordnung (10) nach Anspruch 11, **dadurch gekennzeichnet, dass** den Spannelementen ein Spannmittel (57) zugeordnet ist.

13. Siegelgegenlageanordnung (10) nach Anspruch 12, **dadurch gekennzeichnet, dass** zwischen dem Spannmittel (57) und den Spannelementen ein Drucktopf (58) angeordnet ist, derart, dass die Spannkraft des Spannmittels (57) über den Drucktopf (58) auf die Spannelemente übertragbar ist.

14. Siegelvorrichtung (27), ausgebildet und eingerichtet zum Siegeln einer Deckfolie (14) auf eine mit napfförmigen Blisterhöfen (12) versehene Bodenfolie (13) zur Aufnahme von Produkten (29), umfassend ein Rahmengestell (70), mindestens eine am Rahmengestell (70) gelagerte und beheizbare Siegelwalze (11) sowie für jede Siegelwalze (11) eine am Rahmengestell (70) gelagerte Siegelgegenlageanordnung (10) mit einer mindestens eine Hohlwelle (17) und ein Formatteil (19) umfassenden Gegenwalze (28), wobei die Siegelwalze (11) zur Erzeugung einer Siegelkraft relativ zur Gegenwalze (28) aus einer Warteposition in eine Arbeitsposition auf diese zu und zurück bewegbar ausgebildet und eingerichtet ist, **dadurch gekennzeichnet, dass** die Siegelgegenlageanordnung (10) nach einem oder mehreren der Ansprüche 1 bis 13 ausgebildet und eingerichtet ist.

15. Vorrichtung (74), ausgebildet und eingerichtet zur Herstellung von Blisterverpackungen, umfassend eine Transportvorrichtung (75) zum Fördern einer Bodenfolie (13) in Transportrichtung T, eine Vorwärmstation (76) zum Erwärmen der Bodenfolie (13), eine Tiefziehstation (77) zum Ausbilden napfförmiger Blisterhöfe (12) in der Bodenfolie (13), eine Vorrichtung (78) zum Dosieren von Produkten (29) in den Blisterhöfen (12), eine Vorrichtung zum Zuführen einer Deckfolie (14), eine Siegelvorrichtung (27) zum Herstellen eines Siegelverbundes zwischen der mit Produkten (29) bestückten Bodenfolie (13) und der Deckfolie (14), und eine Vorrichtung zum Vereinzeln einzelner Blisterverpackungen vom Siegelverbund, **dadurch gekennzeichnet, dass** die Siegelvorrichtung (27) nach Anspruch 14 ausgebildet und eingerichtet ist.

## Claims

1. Seal counter member assembly (10), which can be brought into operative connection with a sealing roller (11) for producing a sealed joint between a bottom film (13), having cup-shaped blister cavities (12), and a top film (14), **characterised by** a receiving apparatus (15) with a hollow shaft (17), which can be rotatingly driven and has a flow channel (16), a drive unit (18) for driving the hollow shaft (17), a format part (19) which is configured as a hollow cylinder, at least in sections, in such a manner that it is fitted on a free end (20) of the hollow cylinder (17), wherein the format part (19) is non-rotatably and releasably connected to the hollow shaft (17) and on the outside has recesses (21) on the lateral surface which are configured and adapted to receive the blister cavities (12) of the bottom film (13), and wherein the receiving apparatus (15) is associated with a device (22) for circulating a cooling medium in the flow channel (16) for cooling at least parts of the format part (19), wherein the device (22) for circulating the cooling medium is connected to the flow channel (16), preferably via a rotary leadthrough (23) on another free end (24) of the hollow shaft (17) opposing the format part (19), wherein the format part (19) has a hollow cylindrical sleeve shape, in such a manner that the radial inner surface of the format part (19) is cylindrical throughout, and in that a radial gap (25) is formed between the outer lateral surface of the hollow shaft (17) and the cylindrical inner surface of the format part (19), in which gap a connecting means (26) acting substantially radially is arranged.

2. Seal counter member assembly (10) according to claim 1, **characterised in that** the format part (19) is cylindrical throughout and is fitted in its axial extension completely onto the free end (20) of the hollow shaft (17), in such a manner that the format part (19) surrounds the hollow shaft (17) radially with its entire inner surface.

3. Seal counter member assembly (10) according to claim 1 or 2, **characterised in that** the connecting means (26) comprise a diaphragm (30), preferably formed of metal, which is arranged between the outer lateral surface of the hollow shaft (17) and the inner surface of the format part (19), wherein a circumferential annular gap (31) is formed between the inner surface of the diaphragm (30) and the outer lateral surface of the hollow shaft (17), which annular gap is in flow communication with the flow channel (16) of the hollow shaft (17).

4. Seal counter member assembly (10) according to claim 3, **characterised in that** the diaphragm (30) is formed at least partially as a thin-walled tube, wherein the material from which the diaphragm (30) is made corresponds to the material from which the hollow shaft (17) is made, at least in the region of the lateral surface.

5. Seal counter member assembly (10) according to claim 3 or 4, **characterised in that** the flow channel (16) and the annular gap (31) are connected to each other via at least one hole (34), preferably via a plurality of holes.

6. Seal counter member assembly (10) according to one or more of claims 3 to 5, **characterised in that** the annular gap (31) extends in axial longitudinal extension of the diaphragm (30) substantially over the entire length of the diaphragm (30), wherein the annular gap (31) is sealed with respect to the environment at opposing ends of the diaphragm (30) with sealing elements.

7. Seal counter member assembly (10) according to one or more of claims 3 to 6, **characterised in that** the diaphragm (30) is configured and adapted in a sealing manner with respect to the hollow shaft (17) by means of sealing rings (37).

8. Seal counter member assembly (10) according to one or more of claims 3 to 7, **characterised in that** the hollow shaft (17) is associated with a venting device (40), by means of which the annular gap (31) is configured and adapted to be ventable with respect to the environment.

9. Seal counter member assembly (10) according to claim 8, **characterised in that** the venting device (40) comprises a venting channel (41) which, on the one hand, opens into the annular gap (31) and, on the other hand, has an outlet (42) to the environment, preferably on a free end face of the hollow shaft (17), wherein a venting tube (43) is arranged in the venting channel (41) which venting tube is held by means of spring force against the inner surface of the diaphragm (30) in the radial direction by a spring element (44).

10. Seal counter member assembly (10) according to one or more of claims 1 to 9, **characterised in that** the device (22) for circulating the cooling medium comprises a pump unit (45) for generating a defined flow in the region of a infeed (46) of the cooling medium into the flow channel (16) and a throttle unit (47) for generating a pressure in the cooling medium in the region of a return feed (48) of the cooling medium from the flow channel (16).

11. Seal counter member assembly (10) according to claim 1 or 2, **characterised in that** the connecting means (26) comprises tensioning elements in the form of wedge-shaped ring elements (56).

12. Seal counter member assembly (10) according to claim 11, **characterised in that** the tensioning elements are associated with a tensioning means (57).

13. Seal counter member assembly (10) according to claim 12, **characterised in that** a pressure pot (58) is arranged between the tensioning means (57) and the tensioning elements, in such a manner that the tensioning force of the tensioning means (57) can be transmitted to the tensioning elements via the pressure pot (58).

14. Sealing apparatus (27), configured and adapted for sealing a top film (14) onto a bottom film (13) provided with cup-shaped blister cavities (12) for receiving products (29), comprising a frame (70), at least one heatable sealing roller (11) mounted on the frame (70) and, for each sealing roller (11), a seal counter member assembly (10), mounted on the frame (70), with a counter roller (28) comprising at least one hollow shaft (17) and a format part (19), wherein the sealing roller (11) is configured and adapted to be movable, relative to the mating roller (28), towards said mating roller and back again from an idle position to a working position to generate a sealing force, **characterised in that** the seal counter member assembly (10) is configured and adapted according to one or more of claims 1 to 13.

15. Apparatus (74), configured and adapted for manufacturing blister packs, comprising a transport apparatus (75) for conveying a bottom film (13) in transport direction T, a preheating station (76) for preheating the bottom film (13), a deep-drawing station (77) for forming cup-shaped blister cavities (12) in the bottom film (13), an apparatus (78) for metering products (29) into the blister cavities (12), an apparatus for feeding a top film (14), a sealing apparatus (27) for producing a sealing bond between the bottom film (13) filled with products (29) and the top film (14), and an apparatus for separating individual blister packs from the sealing bond, **characterised in that** the sealing apparatus (27) is configured and adapted according to claim 14.

## Revendications

1. Agencement de butée de scellage (10), qui peut être amené en liaison active avec un rouleau de scellage (11) pour réaliser un assemblage scellé entre une feuille de fond (13) présentant des cavités thermoformées (12) en forme de godet et une feuille de couverture (14), **caractérisé par** un dispositif de réception (15) avec un arbre creux (17) pouvant être entraîné en rotation, présentant un canal d'écoulement (16), une unité d'entraînement (18) pour entraîner l'arbre creux (17), une pièce de module (19), qui est configurée au moins par sections sous forme cylindrique creuse, de telle sorte qu'elle est posée sur une extrémité libre (20) de l'arbre creux (17), la pièce de module (19) étant reliée de manière amovible à l'arbre creux (17) et de manière solidaire en rotation par rapport à celui-ci et présentant sur le côté extérieur, sur la surface d'enveloppe, des renfoncements (21) qui sont configurés et adaptés pour recevoir les cavités thermoformées (12) de la feuille de fond (13), et un dispositif (22) pour faire circuler un agent de refroidissement dans le canal d'écoulement (16) pour refroidir au moins des parties de la pièce de module (19) étant associé au dispositif de réception (15), le dispositif (22) pour faire circuler l'agent de refroidissement étant raccordé au canal d'écoulement (16), de préférence par l'intermédiaire d'un distributeur giratoire (23), à une autre extrémité libre (24) de l'arbre creux (17), opposée à la pièce de module (19), la pièce de module (19) présentant une forme de douille cylindrique creuse, de telle sorte que la surface intérieure radiale de la pièce de module (19) est configurée sous forme cylindrique continue, et qu'entre la surface d'enveloppe extérieure de l'arbre creux (17) et la surface intérieure cylindrique de la pièce de module (19) est configurée une fente radiale (25) dans laquelle est agencé un moyen de liaison (26) agissant essentiellement radialement.

2. Agencement de butée de scellage (10) selon la revendication 1, **caractérisé en ce que** la pièce de module (19) est configurée sous forme cylindrique creuse continue et est placée entièrement dans son extension axiale sur l'extrémité libre (20) de l'arbre creux (17), de telle sorte que la pièce de module (19) entoure radialement l'arbre creux (17) avec toute sa surface intérieure.

3. Agencement de butée de scellage (10) selon la revendication 1 ou 2, **caractérisé en ce que** le moyen de liaison (26) comprend une membrane (30) de préférence formée de métal, qui est agencée entre la surface d'enveloppe extérieure de l'arbre creux (17) et la surface intérieure de la pièce de module (19), une fente annulaire périphérique (31) étant configurée entre la surface intérieure de la membrane (30) et la surface d'enveloppe extérieure de l'arbre creux (17), laquelle est en liaison d'écoulement avec le canal d'écoulement (16) de l'arbre creux (17).

4. Agencement de butée de scellage (10) selon la revendication 3, **caractérisé en ce que** la membrane (30) est configurée au moins partiellement sous la forme d'un tuyau à paroi mince, le matériau dans lequel la membrane (30) est réalisée correspondant au matériau dans lequel l'arbre creux (17) est réalisé au moins dans la zone de la surface d'enveloppe.

5. Agencement de butée de scellage (10) selon la revendication 3 ou 4, **caractérisé en ce que** le canal d'écoulement (16) et la fente annulaire (31) sont reliés entre eux par au moins un alésage (34), de préférence par plusieurs alésages.

6. Agencement de butée de scellage (10) selon une ou plusieurs des revendications 3 à 5, **caractérisé en ce que** la fente annulaire (31) s'étend dans l'extension longitudinale axiale de la membrane (30) essentiellement sur toute la longueur de la membrane (30), la fente annulaire (31) étant étanchéifiée par rapport à l'environnement aux extrémités opposées de la membrane (30) avec des éléments d'étanchéité.

7. Agencement de butée de scellage (10) selon une ou plusieurs des revendications 3 à 6, **caractérisé en ce que** la membrane (30) est configurée et adaptée pour être étanche par rapport à l'arbre creux (17) au moyen de bagues d'étanchéité (37).

8. Agencement de butée de scellage (10) selon une ou plusieurs des revendications 3 à 7, **caractérisé en ce qu'**un dispositif d'aération (40) est associé à l'arbre creux (17), au moyen duquel la fente annulaire (31) est configurée et adaptée pour pouvoir être aérée par rapport à l'environnement.

9. Agencement de butée de scellage (10) selon la revendication 8, **caractérisé en ce que** le dispositif d'aération (40) comprend un canal d'aération (41) qui d'une part débouche dans la fente annulaire (31) et d'autre part présente une sortie (42) vers l'environnement, de préférence sur une surface d'attaque libre de l'arbre creux (17), un tuyau d'aération (43) étant agencé dans le canal d'aération (41), lequel est maintenu dans la direction radiale contre la surface intérieure de la membrane (30) au moyen d'une force élastique par un élément d'amortissement (44).

10. Agencement de butée de scellage (10) selon une ou plusieurs des revendications 1 à 9, **caractérisé en ce que** le dispositif (22) pour faire circuler l'agent de refroidissement comprend une unité de pompe (45) pour générer un débit défini dans la zone d'une arrivée (46) de l'agent de refroidissement dans le canal d'écoulement (16) et une unité d'étranglement (47) pour générer une pression dans l'agent de refroidissement dans la zone d'un retour (48) de l'agent de refroidissement hors du canal d'écoulement (16).

11. Agencement de butée de scellage (10) selon la revendication 1 ou 2, **caractérisé en ce que** le moyen de liaison (26) comprend des éléments de serrage sous la forme d'éléments annulaires en forme de coin (56).

12. Agencement de butée de scellage (10) selon la revendication 11, **caractérisé en ce qu'**un moyen de serrage (57) est associé aux éléments de serrage.

13. Agencement de butée de scellage (10) selon la revendication 12, **caractérisé en ce qu'**un pot de pression (58) est agencé entre le moyen de serrage (57) et les éléments de serrage, de telle sorte que la force de serrage du moyen de serrage (57) peut être transmise aux éléments de serrage par l'intermédiaire du pot de pression (58).

14. Dispositif de scellage (27), configuré et adapté pour sceller une feuille de couverture (14) sur une feuille de fond (13) pourvue de cavités thermoformées (12) en forme de godets pour recevoir des produits (29), comprenant un bâti (70), au moins un rouleau de scellage (11) monté sur le bâti (70) et pouvant être chauffé, ainsi que, pour chaque rouleau de scellage (11), un agencement de butée de scellage (10) monté sur le bâti (70), avec un contre-rouleau (28) comprenant au moins un arbre creux (17) et une pièce de module (19), le rouleau de scellage (11) étant configuré et adapté pour pouvoir être déplacé par rapport au contre-rouleau (28) d'une position d'attente vers une position de travail, vers celui-ci et en retour, afin de générer une force de scellage, **caractérisé en ce que** l'agencement de butée de scellage (10) est configuré et adapté selon une ou plusieurs des revendications 1 à 13.

15. Dispositif (74), configuré et adapté pour fabriquer des emballages thermoformés, comprenant un dispositif de transport (75) pour transporter une feuille de fond (13) dans la direction de transport T, une station de préchauffage (76) pour chauffer la feuille de fond (13), une station d'emboutissage (77) pour former des cavités thermoformées (12) en forme de godet dans la feuille de fond (13), un dispositif (78) pour doser des produits (29) dans les cavités thermoformées (12), un dispositif pour amener une feuille de couverture (14), un dispositif de scellage (27) pour réaliser un assemblage scellé entre la feuille de fond (13) garnie de produits (29) et la feuille de couverture (14), et un dispositif pour séparer des emballages thermoformés individuels de l'assemblage scellé, **caractérisé en ce que** le dispositif de scellage (27) est configuré et adapté selon la revendication 14.
